# FASCICULE DE BREVET EUROPEEN

(11) **EP 0 557 190 B1**
(45) Date de publication et mention de la délivrance du brevet: **07.01.1998**
(21) Numéro de dépôt: 93400397.1
(22) Date de dépôt: 17.02.1993
(51) Int. Cl.: G02B 6/44, G11B 23/023

(54) **Ensemble de modules empilés et articulés**
Zusammenbau von gestapelten Gelenkmodulen
Assembly of stacked articulated modules

(30) Priorité: 21.02.1992 FR 9202030
(43) Date de publication de la demande: 25.08.1993
(73) Titulaire: ALCATEL ALSTHOM COMPAGNIE GENERALE D'ELECTRICITE, 75008 Paris (FR)
(72) Inventeur: Milanowski, Michel, F-95620 Parmain (FR); Vincent, Alain, F-77230 Juilly (FR)
(74) Mandataire: Buffière, Michelle

(56) Documents cités:
- EP-A- 0 085 911
- EP-A- 0 333 316
- WO-A-89/05989
- FR-A- 2 646 928
- US-A- 4 832 436

## Description

La présente invention concerne l'assemblage de modules superposables en un ensemble, ces modules étant rendus accessibles dans ledit ensemble par ouverture des modules autour d'un axe d'articulation prévu pour chacun d'eux. Elle porte sur un tel ensemble de modules empilés et articulés, dans lequel lesdits modules sont plus particulièrement des cassettes de lovage et éventuellement de raccordement de fibres optiques.

Ces cassettes sont des boites de lovage et de protection de fibres optiques et souvent également de protection de raccords des fibres optiques lovées. Elles sont utilisées pour le raccordement de différents câbles optiques ou d'un câble optique à des jarretières optiques. Chaque cassette est affectée à deux fibres à raccorder l'une à l'autre ou de préférence à plusieurs fibres à raccorder individuellement à plusieurs autres fibres.

Plusieurs cassettes sont en général affectées au traitement de la totalité des fibres d'un ou de plusieurs câbles optiques à raccorder à un ou d'autres câbles optiques ou des jarretières dans un boîtier de raccordement. Elles sont empilées en un ensemble pour leur maintien avec un moindre encombrement dans le boîtier et sont montées articulées pour avoir accès à chacune d'elles, notamment pour des opérations de maintenance.

Le document FR-A- 2 646 928 décrit un tel ensemble de cassettes dans un boîtier de raccordement de câbles à fibres optiques. Selon ce document, l'ensemble de cassettes est monté en bout d'un plateau support sur lequel sont fixées les extrémités des câbles à raccorder. Ce plateau support est flanqué de joues latérales pour définir un espace protégé de transfert des fibres, laissées en surlongueur sur les extrémités des câbles, à l'ensemble des cassettes.

Dans cet ensemble les cassettes sont empilées en présentant un léger décalage l'une sur l'autre et sont articulées autour d'axes individuels décalés pareillement les uns des autres. A cet effet, chacune d'elles portent une paire de bras latéraux qui sont pivotants autour d'une paire d'axes d'articulation sur les joues latérales du plateau support. Chacune présente une course limitée possible en rotation relativement au plan du plateau support, pour sa mise en position d'ouverture transversalement au plateau support. Des moyens d'encliquetage temporaire sont prévus au niveau du couplage de chaque paire de bras sur sa paire d'axes d'articulation pour limiter cette course en rotation, et définir une position d'ouverture.

Ces dispositions de montage et d'ouverture des cassettes sont relativement complexes, peu aisées à mettre en oeuvre et fragiles. Elles imposent le maintien de l'ensemble et des cassettes qui le composent sur les joues d'un support en U. Elles conduisent à une ouverture des cassettes qui est relativement délicate, du fait de leur montage sur de longs bras articulés. Bien qu'elles soient, prévues pour limiter les contraintes et courbures excessives des fibres, le manque de stabilité des cassettes lors de leur ouverture ne permet pas de garantir le maintien des fibres dans les conditions requises.

Le document EP-A-0 333 316 divulgue un ensemble de cassettes empilées les unes sur les autres et articulées les unes aux autres. Ces cassettes comportent sur l'une de leurs faces périphériques un gond supérieur et un gond inférieur à chacune des deux parties terminales de cette face. Les deux gonds supérieurs de l'une des cassettes et les deux gonds inférieurs d'une autre cassette superposée sur la première définissent deux couples de gonds, pour la solidarisation articulée de ces deux cassettes à l'aide d'un doigt reçu et bloqué dans les deux gonds de chaque couple.

Le document EP-A-0 085 911 divulgue un autre mode d'assemblage de modules ou cassettes, réalisé sur un support modulaire. Le support est constitué de supports élémentaires affectés aux différentes cassettes et formés chacun par un étrier en forme d'auge. Chaque étrier reçoit l'un des bords de la cassette. Il est muni intérieurement de deux doigts intérieurs en vis-à-vis pour l'articulation de cette cassette, dans l'étrier, entre deux positions limites définies par les côtés de l'étrier. Les supports élémentaires sont par ailleurs encliquetables les uns à la suite des autres, pour leur solidarisation et ainsi la solidarisation des cassettes articulées dans ces supports élémentaires.

La présente invention a pour but de réaliser de manière simple et aisée l'assemblage de modules et l'articulation simultanée de chacun d'eux, sensiblement par l'un des bords de chaque module.

Elle a pour objet un ensemble de modules empilés et articulés, comportant une base plane, une pluralité de modules empilables les uns sur les autres et sur la base et un support d'assemblage articulé desdits modules, lesdits modules étant plats et sensiblement rectangulaires et ayant deux grandes faces pour leur empilement et quatre bords périphériques étroits et opposés deux à deux, ledit support étant maintenu sur ladite base, s'étendant sur la hauteur des modules empilés les uns sur les autres et étant muni de moyens d'articulation définis parallèlement à ladite base et au pas des modules empilés sur cette base, pour le pivotement des différents modules entre une première position pour laquelle ces modules sont sensiblement parallèles à la base et une deuxième positron pour laquelle ils sont sensiblement orthogonaux à ladite base, à l'exception éventuelle du premier module sur ladite base, caractérisé en ce que ledit support est une réglette longitudinale constituée de tronçons successifs s'étendant les uns à la suite des autres dans la direction d'empilement des modules, et solidarisés et articulés les uns aux autres par lesdits moyens d'articulation, chacun desdits tronçons de la réglette étant muni de premiers moyens de montage et retenue affectés à la fixation rigide et amovible des différents modules sensiblement contre une face dite d'assemblage de ladite réglette, et en ce que chacun desdits modules est équipé sur un premier de ses bords périphériques de deuxièmes moyens de montage et retenue complémentaires desdits premiers pour cette fixation rigide et amovible de chaque module sur ladite réglette.

L'ensemble présente en outre au moins l'une des caractéristiques additionnelles suivantes:
- il comporte en outre un support plan de base sur lequel lesdits modules sont empilés, et ladite réglette comporte au moins une patte de fixation audit support de base;
- il comporte sur une face dite avant de la réglette, des butées successives s'étendant en regard les unes des autres sur les éléments successifs de la réglette mais présentant un décalage angulaire sensiblement de 90° de l'un desdits éléments au suivant, en définissant une position dite d'ouverture de module autour de la charnière du module concerné;
- ladite réglette est constituée par une pièce d'un seul tenant présentant des sections d'épaisseur réduite définissant les charnières, ou constituée d'éléments individuels assemblés non jointivement les uns aux autres par au moins une bande définissant entre eux lesdites charnières, ou constituée d'éléments emboîtés à la suite les uns sur les autres en définissant simultanément lesdites charnières;
- le bord opposé au premier bord de chacun des modules est équipé, identiquement audit premier bord, de deuxièmes moyens de montage et de retenue pour le montage sélectif de ladite barrette sur l'un d'eux dit premier bord d'articulation;
- l'ensemble comporte en outre des dispositifs de verrouillage des modules les uns sur les autres, adaptés et montés individuellement sur le bord opposé au premier bord d'articulation et équipés individuellement de troisièmes moyens de montage et de retenue, identiques auxdits premiers prévus sur ladite réglette;
- chaque dispositif est équipé d'une paire de doigts et de trous correspondants, de centrage des dispositifs les uns sur les autres;
- lesdits modules sont des cassettes de lovage et de raccordement de fibres optiques;
- chaque cassette comporte quatre accès possibles aux quatre coins sensiblement de la cassette, pour lesdites fibres qu'elle reçoit, parmi lesquels les accès recevant lesdites fibres et dits sélectionnés sont ceux les plus éloignés du premier bord portant ladite réglette.

Les caractéristiques et avantages de la présente invention ressortiront de la description détaillée d'exemples de réalisation illustrés dans les dessins ci-annexés. Dans ces dessins:
- la figure 1 est une vue schématique en perspective éclatée d'un ensemble de cassettes et de l'une des cassettes dudit ensemble, selon la présente invention,
- la figure 2 est une vue de dessus d'un mode de réalisation dudit ensemble ou de sa cassette terminale supérieure,
- la figure 3 est une vue de face d'une réglette d'assemblage et d'articulation appartenant audit ensemble et réalisée selon un premier ou deuxième mode de réalisation,
- la figure 4 est une vue de côté du mode de réalisation à droite de la ligne XX de la figure 3,
- la figure 5 est une vue de face d'un élément dit mâle et inférieur de la réglette d'assemblage et d'articulation selon le deuxième mode de réalisation,
- la figure 6 est une vue de dessus et en demi-coupe de l'élément de la figure 5,
- la figure 7 est une vue de face d'un élément dit femelle de la réglette d'assemblage et d'articulation selon le deuxième mode de réalisation précité,
- la figure 8 est une vue de dessus et en demi-coupe de l'élément de la figure 7,
- les figures 9 et 10 sont deux vues correspondant aux figures 5 et 6 de l'élément dit mâle mais non inférieur de la réglette des figures 3 et 4, pour le deuxième mode de réalisation,
- les figures 11 et 12 sont deux vues de face et de dessus d'un dispositif de verrouillage affecté à chaque cassette et appartenant audit ensemble de cassettes de la figure 1,
- les figures 13 et 14 sont deux vues de côté et en coupe du dispositif de verrouillage, selon la flèche XIII et la ligne XIV-XIV de la figure 11,
- la figure 15 est une vue de profil de l'ensemble de cassettes selon la figure 1, avec la cassette supérieure de l'ensemble ouverte,
- les figures 16 et 17 sont deux vues en coupe à échelle agrandie des parties XVI et XVII de la figure 15,
- la figure 18 est une vue en perspective d'un élément d'une réglette d'assemblage et d'articulation, selon un troisième mode de réalisation,
- la figure 19 est une vue de dessus de l'élément selon la figure 18 monté sur une cassette partiellement illustrée, cette vue étant également une vue de dessus de la réglette résultante sur les cassettes correpondantes,
- la figure 20 est une vue en coupe, selon la ligne XX-XX de la figure 19,
- les figures 21, 22 et 23 sont des vues de face et en coupe partielle pour l'une d'elles et de côté et en coupe pour les deux autres, selon les lignes ou la flèche correspondantes XXI-XXI, XXII, XXIII-XXIII de la figure 19, illustrant l'assemblage articulé cassettes par la réglette selon ce troisième mode de réalisation.

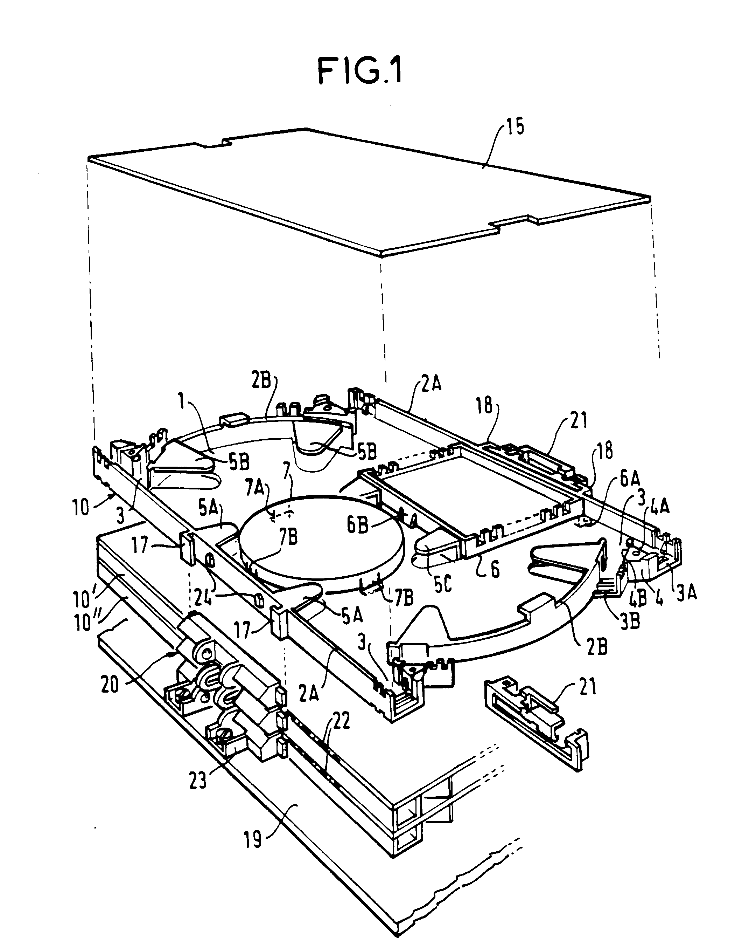

L'ensemble de modules empilés et articulés selon l'invention est en particulier constitué par des cassettes de fibres optiques. La figure 1 montre une cassette terminale 10 de l'ensemble, qui est illustrée en perspective éclatée et deux autres cassettes 10' et 10'' analogues à la précédente et déjà empilées l'une sur l'autre et chacune articulée. Ces modules peuvent être des boîtiers autres que des cassettes optiques, qui sont assemblés en un ensemble de boîtiers empilés et individuellement articulés, conformément à la présente invention.

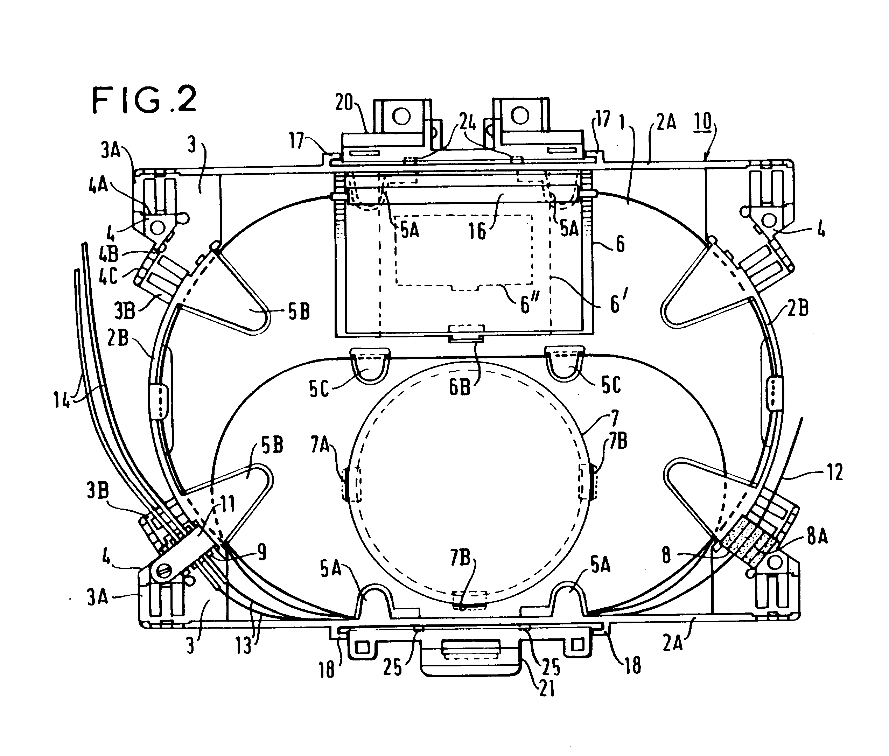

La cassette 10 est décrite en regard de la figure 1 ou 2. Elle comporte un fond plat 1, sensiblement rectangulaire dont les petits côtés sont partiellement tronqués et arqués. Deux rebords opposés et droits 2A et deux autres rebords opposés et arqués 2B entourent le fond. Leurs terminales définissent entre elles sur le fond, quatre accès 3 dits doubles, aux quatre coins du fond, pour les fibres reçues dans la cassette.

Des plots 4, saillants sur le fond 1 et centrés chacun dans chaque accès double, divisent chacun desdits accès doubles en deux canaux d'accès 3A et 3B. Ces plots sont de même hauteur que les rebords et de section sensiblement triangulaire. Deux faces latérales 4A et 4B de chaque plot sont en regard des parties terminales des rebords de chaque accès double et délimitent latéralement avec ces parties terminales chaque canal d'accès. Une excroissance 4C sur chaque plot prolonge sa face latérale 4B en regard de la partie terminale du rebord 2B, vers l'extérieur de la cassette.

Des pattes 5A, sur les rebords 2A, et 5B sur les rebords 2B s'étendent parallèlement au fond 1 sur l'intérieur de la cassette. Deux autres pattes 5C analogues aux pattes 5A sont saillantes sur le fond, sensiblement d'un côté de son axe longitudinal médian. Ces pattes 5A, 5B et 5C servent au maintien sous elles des fibres lovées dans la cassette.

Le fond 1 est en plastique et est moulé. Les rebords, les plots et les pattes proviennent de moulage avec le fond.

Le fond 1 est équipé d'un support 6, recevant et maintenant sur lui des raccords tels que 16 de fibres optiques, et d'un cylindre 7 de lovage des fibres. Tous deux sont montés amovibles côte à côte sur la largeur du fond, dans sa partie médiane. Le support et le cylindre présentent à cet effet un jeu de pattes d'encliquetage, formé de deux pattes rigides 6A et d'une troisième élastique 6B sur le support et d'une patte rigide 7A et d'une ou deux autres pattes élastiques 7B sur le cylindre. Le fond 1 présente quant à lui des jeux d'ouvertures non référencées, correspondant notamment au jeu de pattes de chacun de ces éléments, pour leur encliquetage.

Le support de raccords est choisi parmi différents supports possibles, pour différents types de raccords, comprenant le support 6 précité et d'autres supports tels que 6' et 6'' (figure 2). Le cyclindre 7 précité peut lui-même ne pas être utilisé, dans ce cas dex supports 6, 6', 6'' peuvent être montés sur le fond. Différents jeux d'ouvertures sont initialement prévus sur le fond pour le montage sélectif de ces éléments 6, 6', 6'' et 7 sur le fond et l'adaptation à la demande de la cassette résultante. Les pattes 5A et 5C peuvent être éliminées si nécessaire, pour l'adaptation souhaitée de la cassette.

Sur la cassette 10, deux des quatre accès doubles 3 sont sélectionnés, ainsi que l'un des deux canaux d'accès 3A et 3B de chaque accès double sélectionné, en fonction du mode d'utilisation de la cassette en garantissant un rayon minimal de courbure aux fibres arrivant dans la cassette.

Les deux canaux d'accès sélectionnés sont eux-mêmes éventuellement équipés d'un élément d'un premier type 8 et/ou d'un deuxième type 9, de séparation unitaire en ligne et de tenue des fibres que chacun d'eux reçoit.

L'élément du premier type 8 est affecté à des fibres nues 12 et constitué par un pavé souple qui peut être monté et bloqué dans l'un quelconque des canaux d'accès. Il présente une série de fentes 8A qui s'étendent côte à côte sur la largeur du canal d'accès dans lequel il est monté et bloqué.

L'élément du deuxième type 9 est affecté à des fibres 13 initialement protégées dans des tubes individuels de gainage 14. Il est constitué par une pièce en U dont les branches en regard sont formées par une série de dents. Les dents définissent entre elles des fentes, en vis-à-vis d'une branche à l'autre et côte à côte sur la largeur de l'un quelconque des canaux d'accès dans lequel cet élément est monté et bloqué. Une patte 11, indépendante de l'élément 9 et du fond 1, est associée à cet élément. Elle est fixée par l'une de ses extrémités sur le plot 4 et s'étend sur l'élément 9 pour garantir le maintien de fibres tubées dans ses fentes. En variante les fibres tubées peuvent être retenues dans le canal d'accès les recevant par un collier, non représenté.

Un couvercle 15 rapporté sur les rebords 2A, 2B ferme la cassette 10 et protège l'ensemble des équipements de son fond et des canaux d'accès sélectionnés et équipés. La cassette 10 comporte, en outre, pour son assemblage et son verrouillage sur la cassette 10', une paire de pattes de guidage 17, 18 sur ses rebords 2A. Ces paires de pattes de guidage sont saillantes sur la face extérieure et la hauteur des rebords 2A. Les pattes de chacune d'elles sont en forme de cornière et en regard l'une de l'autre en étant symétriques par rapport à l'axe transversal médian de la cassette.

Les cassettes 10, 10' et 10'' sont toutes identiques tout au moins extérieurement. Elles sont superposables en un empilement réalisé sur un support plan de base 19 et constituent sur ce support de base l'ensemble de cassettes empilées et articulées selon la présente invention.

Cet ensemble de cassettes comporte une réglette 20 d'assemblage et d'articulation des cassettes individuelles 10, 10' et 10'' et un jeu de dispositifs individuels 21 de verrouillage des cassettes. Cette réglette 20 et ces dispositifs 21 sont reçus et retenus dans l'une et l'autre, respectivement, des deux paires de pattes de guidage 17, 18 des différentes cassettes.

La réglette d'assemblage et d'articulation 20 définit des axes ou charnières d'articulation 22 pour les cassettes individuelles, exception faite de la première cassette 10'' de l'empilement. Ces axes d'articulation 22 sont au pas des cassettes sur la hauteur de l'empilement. La réglete 20 a deux pattes de fixation 23, à son extrémité située au bas de l'empilement. Ces pattes de fixation 23 sont solidarisées par vis ou analogues au support de base 19 et rendent la première cassette fixe sur ce dernier, dans une position dite fermée.

Une paire de doigts de retenue 24 ou 25 est saillante sur la face extérieure de chaque rebord 2A. Elle est intérieure à la paire de pattes de guidage 17 ou 18 et assure la retenue sur elle de la réglette 20 ou du dispositif de verrouillage 21 monté dans la paire de pattes de guidage.

En regard de la figure 2, on comprend aisément que les quatre accès doubles aux quatre coins de la cassette et les deux canaux d'accès de chacun d'eux permettent de sélectionner deux canaux d'accès pour les fibres, appartenant à deux des accès doubles eux-mêmes sélectionnés. De même l'assemblage articulé des cassettes le long de l'un de leurs rebords 2A et leur verrouillage sur l'autre rebord opposé sont réalisés sélectivement. L'assemblage articulé est réalisé sur celui des rebords 2A auquel n'appartiennent pas les deux accès doubles 3 sélectionnés, lorsque les fibres arrivent le long des rebords 2B dans leurs canaux d'accès 3A ou 3B.

Ainsi, l'axe d'articulation de chaque cassette de l'ensemble est à une distance des deux accès doubles sélectionnés, qui est sensiblement égale à la largeur de la cassette. Il en résulte que les fibres, par ailleurs retenues dans chaque canal d'accès sélectionné, ne subissent aucune sollicitation ou courbure excessive lors de l'ouverture de cette cassette dans l'ensemble constitué.

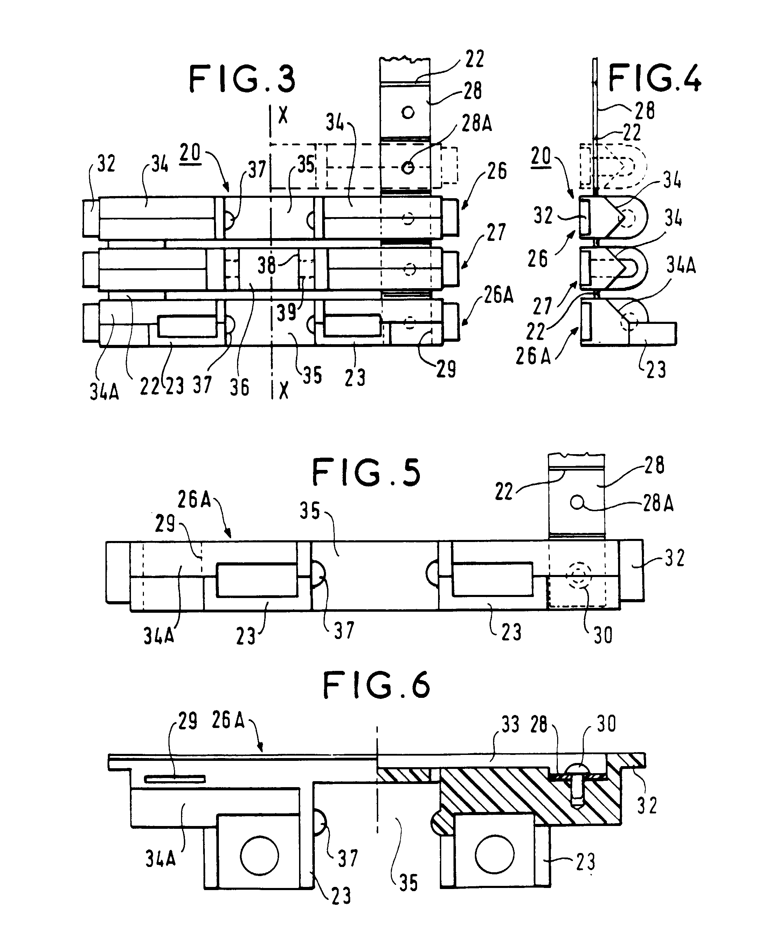

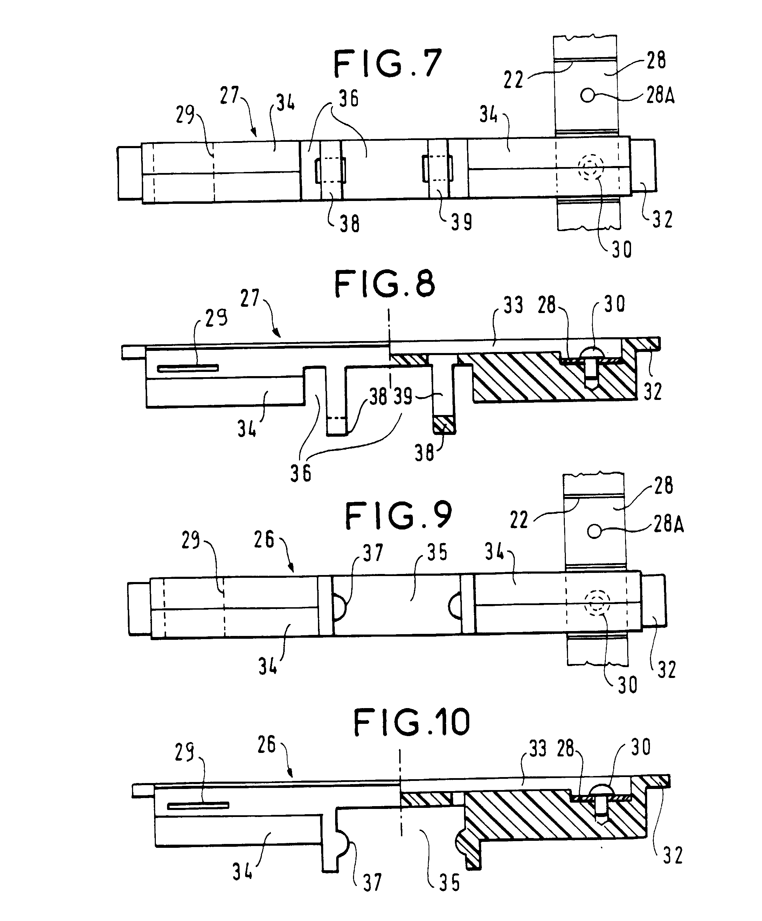

La réglette d'assemblage et d'articulation 20 est décrite en détail en regard des figures 3 à 10. Elle est d'axe de symétrie XX sur la hauteur de l'empilement de cassettes de l'ensemble. Dans la figure 3, on a illustré à gauche et à droite de cet axe XX un premier et un deuxième mode de réalisation de cette réglette 20, ce deuxième mode de réalisation étant simplement suggéré en pointillés dans la figure 4.

La différence essentielle entre ces deux modes de réalisation réside en ce que dans le premier la réglette 20 est une pièce moulée d'un seul tenant, tandis que dans le deuxième elle est formée d'éléments individuels moulés tels que 26, 26A et 27 qui sont assemblés non jointivement à la suite les uns des autres par deux bandes d'assemblage telle que la seule 28 représentée. La réglette d'un seul tenant présente de manière comparable des tronçons reliés les uns aux autres mais non jointifs, qui correspondent aux éléments individuels 26, 26A et 27 et sont référencés comme ces éléments.

Ces tronçons diffèrent des éléments individuels par la présence sur la hauteur de ces derniers de deux fentes 29, les traversant de part en part et recevant les bandes d'assemblage. Chaque bande d'assemblage 28 a des trous 28A au pas d'assemblage des éléments individuels. Elle est enfilée dans les fentes 29 des éléments individuels et fixée à chacun d'eux à l'aide d'une vis 30 ou analogue engagée dans le trou correspondant 28A et vissée ou ancrée dans l'élément individuel concerné (figures 6, 8, 10).

A cette différence de constitution possible de la réglette 20 correspond une obtention différente de ses charnières 22. Dans la réglette d'un seul tenant, les charnières 22 sont définies par des sections d'épaisseur réduite et de faible hauteur prévues directement sur cette réglette entre ses tronçons successifs ainsi reliés à la suite les uns des autres. Dans la réglette à éléments individuels, les charnières 22 sont définies sur chaque bande 28, également par des sections d'épaisseur réduite et de faible hauteur sur la bande, venant entre deux éléments individuels successifs.

Dans l'un et l'autre de ces deux modes de réalisation, ces sections réduites ou charnières 22 sont au pas des cassettes empilées de l'ensemble constitué.

Les autres dispositions prévues sur la réglette 20 d'un seul tenant ou à éléments individuels assemblés sont par ailleurs identiques. Ce sont, en regard des figures 3 à 10 précisées le cas échéant et éventuellement des figures 1 et 2 pour les fonctions assurées avec la cassette correspondante:
- une paire de pattes latérales 32 sur chaque tronçon ou élément, reçue dans la paire de pattes de guidage 17 de la cassette,
- un évidement arrière 33 relativement long et large, (figures 6, 8 et 10), sur chaque tronçon ou élément, dans lequel se loge et se bloque la paire de doigts de retenue 24 de la cassette,
- une paire de butées avant 34 à section transversale triangulaire sur chaque tronçon ou élément, cette paire de butées étant active en position dite d'ouverture de la cassette sur la paire de butées avant de la cassette adjacente, de rang inférieur, restant en position de fermeture,
- un évidement central avant 35 ou 36 (figures 3, 5 à 10) sur la hauteur de chaque tronçon ou élément mais de largeur légèrement différente et équipé différemment d'un tronçon ou élément à celui adjacent, en définissant alternativement un tronçon ou élément dit mâle 26, 26A et un tronçon ou élément dit femelle 27 se bloquant l'un sur l'autre, lorsque les deux cassettes concernées sont l'une en position d'ouverture et l'autre en position de fermeture,
- une paire de bossages intérieurs 37 (figures 3 à 6, 9 et 10) saillants et en vis-à-vis sur les bords latéraux de l'évidement central avant 35, ces bords latéraux étant saillants sur le bout des butées avant 34 et leurs bossages sensiblement à niveau avec le bout des butées avant,
- une paire de branches 38 comportant chacune une lumière 39 (figures 3, 4, 7 et 8), dans l'évidement avant 36, ces branches étant légèrement décalées des bords de l'évidement 36, pour l'obtention d'une certaine souplesse, et étant logées dans l'évidement 35 contre les bords de celui-ci en ayant les bossages 37 dans les lumières 39, lorsque la cassette supérieure concernée est en position ouverte sur celle adjacente inférieure en position de fermeture.

Le premier tronçon 26A au bas de l'empilement se distingue du ou des tronçons 26 par la paire de pattes de fixation 23 qu'il présente pour sa fixation au support de base 19. Ces pattes s'étendent sous la paire de butées avant, tronquées et notées 34A, et partent des bords de l'évidement 35.

On précise que les butées avant 34 ont leurs faces dites supérieure et inférieure chanfreinées à 45°. Leur arête est à mi-hauteur sur chaque tronçon ou élément. Elles définissent la position d'ouverture des cassettes individuelles à 90° de leur position de fermeture et interdisent une ouverture au-delà de cette position définie.

Bien entendu un élément femelle peut en variante constituer le premier tronçon fixé au bas de l'empilement sur le support de base, les éléments suivants étant alors alternativement mâles et femelles.

Le montage et l'empilement des cassettes sur la réglette 20 d'assemblage et d'articulation se font après constitution, le cas échéant, de la réglette, quand celle-ci est à éléments individuels. Les pattes de fixation 23 peuvent être alors fixées sur le support de base 19 ou le sont en dernier lieu.

Le bord d'articulation 2A des cassettes étant choisi, la paire de pattes de guidage 17 sur le rebord 2A correspondant de la première cassette est enfilé dans les pattes latérales 32 du tronçon ou élément 26A de la réglette. Ceci se fait en dégageant par pliage autour de la charnière 22 attenante au tronçon ou élément 26A tous les tronçons ou éléments supérieurs.

Les autres cassettes sont montées successivement et identiquement à la première cassette.

L'ensemble des cassettes étant constitué et fixé sur le support de base, on note que la réglette 20 assure d'elle-même la tenue des cassettes en position de fermeture les unes sur les autres. Cette tenue naturelle n'est cependant pas totalement sure. Le verrouillage des cassettes les unes sur les autres en position de fermeture mais également en position d'ouverture est assuré par les dispositifs 21 rapportés individuellement sur l'autre rebord 2A des cassettes. Ces dispositifs permettent aussi le verrouillage d'un groupe de cassettes successives supérieures, les unes sur les autres en position d'ouverture alors que la ou les cassettes inférieures formant l'autre groupe sont elles mêmes verrouillées en fermeture. Ils libèrent les cassettes individuelles, pour leur passage d'un groupe à l'autre.

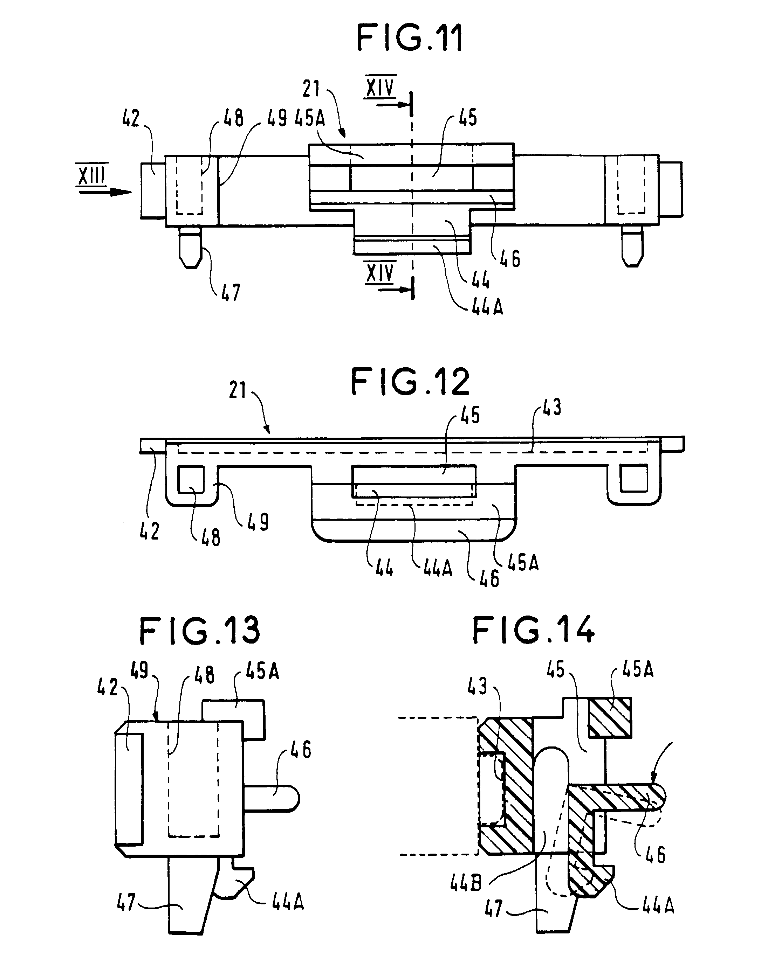

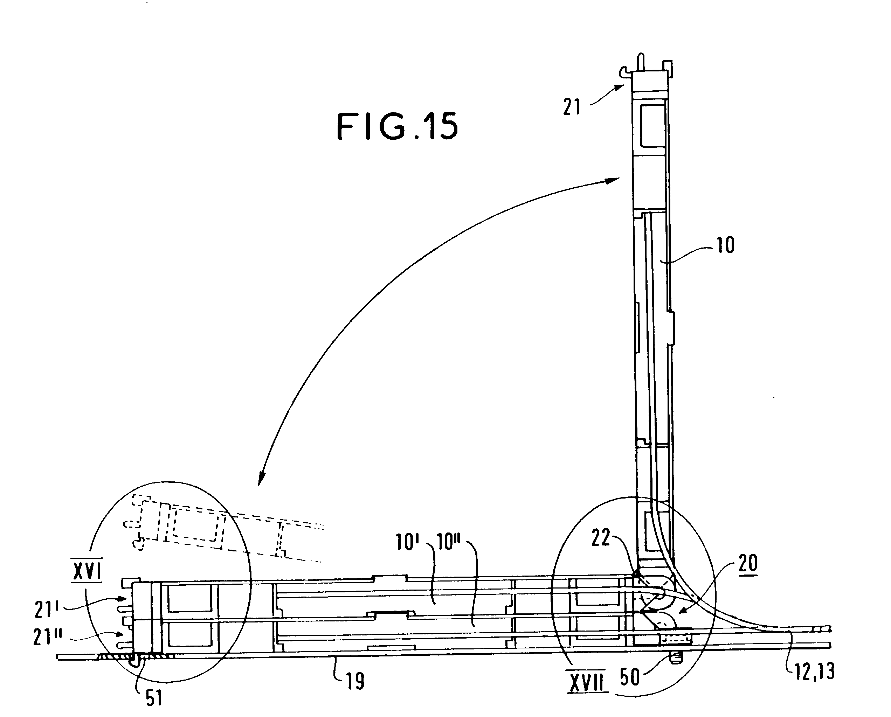

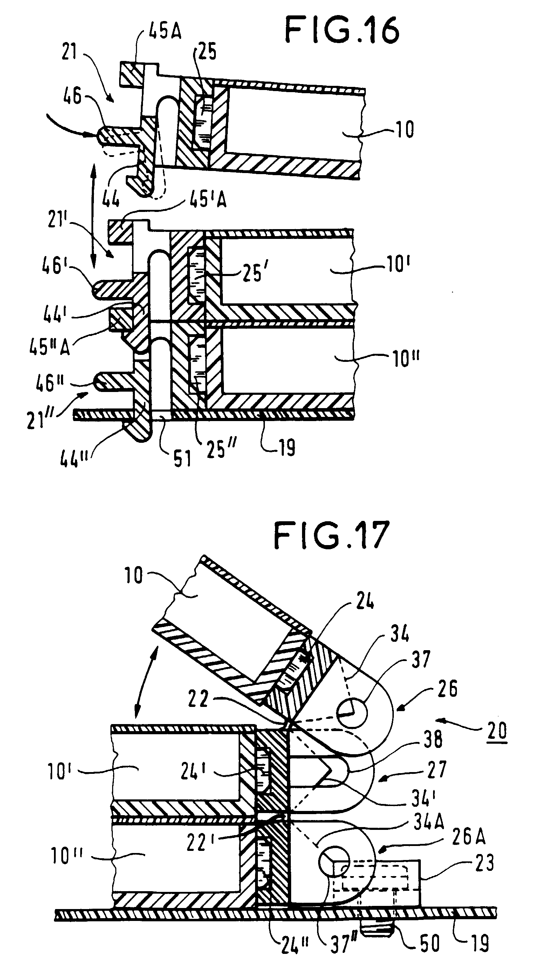

Ces dispositifs de verrouillage 21 sont identiques entre eux. Ils sont décrits en regard des figures 11 à 14 représentant l'un d'eux et des figures 15 et 16.

Le dispositif 21 est un corps moulé allongé, de hauteur et longueur semblables à celles d'un tronçon ou élément de la réglette d'assemblage et d'articulation décrite précédemment. Des dispositions également analogues aux précédentes sont prévues sur le dispositif 21, en ce qui concerne son montage sur l'une quelconque des cassettes contre le rebord 2A disponible de celle-ci.

Il présente pour ce montage une paire de pattes latérales 42 et en évidement arrière 43.

Il présente sur la partie médiane de sa face avant, pour sa fonction de verrouillage d'une cassette sur une autre:
- une patte d'encliquetage 44 saillante sur le bord inférieur du dispositif, considéré horizontalement, cette patte présentant une dent terminale 44A en crochet tourné vers l'avant,
- une ouverture 45, ouverte sur sa face avant et sa face supérieure et adaptée aux dimensions du crochet 44A sur sa face avant, mais laissant un jeu possible à la patte d'encliquetage et son crochet sur sa face supérieure, cette ouverture étant limitée par un bord renforcé 45A à l'opposé de la patte d'encliquetage,
- un levier 46 d'actionnement de la patte d'encliquetage 44, formé sur cette patte à l'opposé de sa dent 44A et saillant sur la face avant en limitant l'autre bord de l'ouverture 45 sur la face avant en regard du bord renforcé 45A,
- un évidement 44B à l'arrière de la patte d'encliquetage 44, pour l'élasticité de cette dernière.

Il présente, en outre, pour son centrage sur l'un ou l'autre des dispositifs identiques adjacents portés par les cassettes de l'ensemble, lors du verrouillage des cassettes l'une sur l'autre,
- une paire de doigts de centrage 47, largement saillants sur sa face inférieure, et
- une paire de trous de centrage 48, formés dans l'alignement axial des doigts individuels de centrage et ouverts sur sa face supérieure.

Ces doigts et trous de centrage sont définis sur deux portions 49, en surépaisseur sur le dispositif, qui sont attenantes à l'une et l'autre des pattes latérales 42 mais décalées de la patte centrale d'encliquetage 44. Les doigts de centrage 47 ont leur facette avant et les bouts de leurs autres facettes chanfreinées. Ils sont ainsi rendus d'engagement aisé dans les trous de centrage 48 d'un autre dispositif identique, qui est porté par la cassette adjacente et inférieure à celle portant le dispositif considéré. Ce centrage évite que les charnières soient soumises à un effort particulier lors du verrouillage de dispositifs 21.

Les figures 15 à 17 montrent clairement l'assemblage articulé, le verrouillage et l'ouverture possible des cassettes de l'ensemble qu'elles forment sur le support plan de base. La réglette 20 illustrée est celle d'une seule pièce selon le premier mode de réalisation précité. Ses trois tronçons sont désignés successivement par leurs références 26A, 27 et 26 pour les trois cassettes illustrées.

Sur ces figures 15 à 17, on a distingué d'une cassette à l'autre, selon le cas par le signe supplémentaire "prime" ou "seconde" les charnières individuelles 22, les dispositifs de verrouillage 21, ainsi que les autres dispositions fonctionnelles définies par les éléments ou tronçons 26A, 27 et 26 de la réglette 20 et sur les dispositifs 21.

On voit, la réglette 20 solidarisée au support de base 19 par une vis 50 engagée à travers chaque patte de fixation 23 dans ce support. Cette fixation supprime la charnière de la cassette 10'' rendue fixe en position de fermeture. Cette cassette 10'' est en outre, à l'opposé des pattes de fixation 23, verrouillée sur le support de base par la dent d'encliquetage 44'' de son dispositif 21", qui est reçue dans une ouverture correspondante 51 du support de base. On note que les deux doigts de centrage du dispositif 21'' peuvent être supprimés ou sont reçus dans deux ouvertures de centrage qui leur correspondent dans le support de base.

La cassette 10' montrée en position fermée a son dispositif de verrouillage 21' centré et encliqueté sur le dispositif 21".

La cassette 10 est quant à elle montrée en position d'ouverture. Les faces inférieures des butées 34 sont alors en appui contre les faces supérieures des butées 34' et les bossages 27 engagés dans les lumières des branches élastiques 38. Cette ouverture est assurée autour de la charnière 22 quasi attenante au bord inférieur du rebord 2A concerné. Elle est obtenue, par déverrouillage au départ du dispositif 21, ce déverrouillage étant réalisé en actionnant le levier 46 pour libérer sa patte d'encliquetage du dispositif 21'.

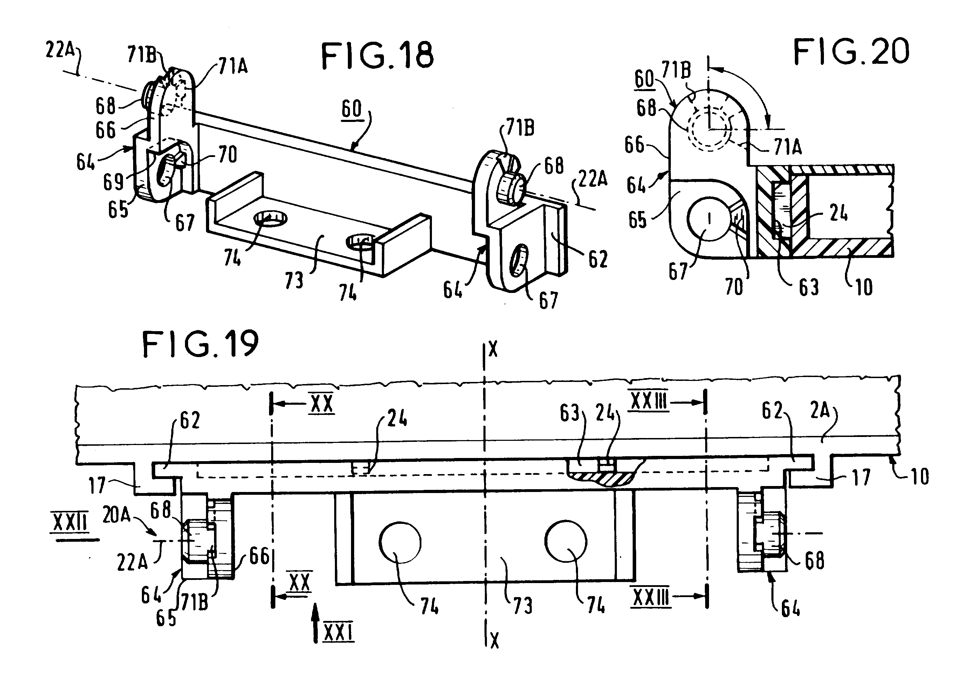

Les figures 18 à 23 sont relatives à la constitution d'une réglette d'assemblage et d'articulation selon un troisième mode de réalisation. Cette réglette est constituée d'éléments individuels, tels que l'élément 60 décrit en détail en regard des figures 18 à 20, qui sont tous identiques et emboîtés directement les uns sur les autres.

L'élément 60 est un corps moulé sur lequel sont prévues des dispositions comparables à celles sur chaque tronçon ou élément de la réglette décrite précédemment ou sur le dispositif de verrouillage décrit précédemment, en ce qui concerne son montage sur l'une quelconque des cassettes et sur l'un des deux rebords 2A de cette cassette.

Il présente pour ce montage, une paire de pattes latérales 62 reçues dans les pattes de guidage 17 de la cassette 10 et un évidement arrière 63 recevant la paire de doigts de retenue 24 de la cassette.

Des dispositions particulières sont par contre prévues pour son assemblage à un autre élément identique et pour l'obtention d'une charnière d'articulation. Ces dispositions particulières sont définies sur une paire d'oreilles 64 quasi terminales, qui sont attenantes aux pattes latérales 62 et saillantes sur la hauteur de la face avant et le bord supérieur de l'élément.

Ces oreilles ont un épaulement au niveau du bord supérieur de l'élément, les divisant chacune en une partie inférieure 65 solidaire de la face avant et rigide et une partie supérieure 66 rendue légèrement souple et déformable autour de sa jonction à la partie inférieure. Les bords supérieur et inférieur de chacune des oreilles sont arrondis. Leur bord avant est droit.

Les parties inférieures 65 de ces deux oreilles 64 ont chacune un trou central 67. Les parties supérieures 66 ont quant à elles un doigt cylindrique 68, saillant sur chacune d'elles. Les parties inférieures 65 étant plus extérieures que les parties supérieures 66, les doigts cylindriques 68 sont saillants sur les faces extérieures des parties supérieures.

Ces parties supérieures 66 s'encastrent intérieurement contre les parties inférieures d'un autre élément identique lors de l'assemblage de deux éléments. Les doigts cylindriques 68 de l'un des éléments sont engagés dans les trous 67 de l'autre en définissant un axe d'articulation 22A, analogue à l'une des charnière précitées. On a désigné par la référence 69, le bord intérieur de l'épaulement entre les parties 65 et 66, qui joue le rôle de butée définissant une position d'ouverture maximale autour d'une charnière réalisée.

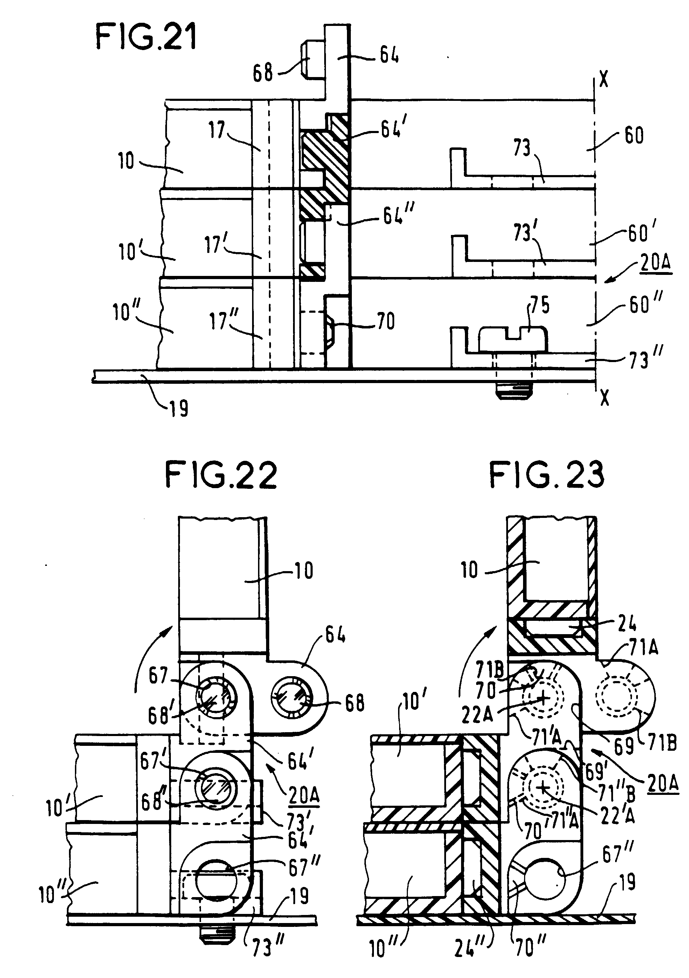

Pour définir deux positions stables, de fermeture et d'ouverture, autour d'un axe ou charnière d'articulation 22A réalisée, les parties inférieures 65 ont un bossage 70 sur leur face intérieure et les parties supérieures 66 ont deux empreintes 71A et 71B dans leur face extérieure. Le bossage 70 est sur le bord du trou 67 et de faible hauteur. Les deux empreintes sont au pied du doigt cylindrique 68. Elles sont complémentaires du bossage 70 et sont décalées de 90° l'une de l'autre, ainsi que traduit entre leurs axes sur la figure 20. L'une d'elles, 71A, correspond à la position du bossage quand deux éléments sont assemblés et définissent la position de fermeture.

L'élément 60 présente en outre une patte centrale de fixation 73, saillante sur sa face avant depuis son bord inférieur. Cette patte 73 a deux trous 74.

Les figures 21 à 23 montrent une réglette d'assemblage et d'articulation, notée globalement 20A, qui est constituée d'éléments 60, 60', 60'', tous identiques, et est montée sur les cassettes 10, 10' et 10'' précitées et leur support de base précité 19. La constitution de la réglette et l'obtention des axes d'articulations est expliquée en distinguant par le signe "prime" ou "seconde" les dispositions fonctionnelles identiques prévues sur les différents éléments 60, 60' et 60".

La constitution de la réglette 20A est réalisée initialement ou au fur et à mesure de l'empilement des cassettes 10", 10' et 10 sur le support de base 19, les cassettes portant alors chacune leur élément 60", 60', 60.

L'élément 60'' est fixé au support de base 19 par deux vis 75 bloquant sa patte de fixation 73'' sur le support de base. Les trous 67'' laissés vides correspondent à l'absence de charnière d'articulation de la cassette 10". Cet élément 60'' a par contre ses doigts cylindriques 68'' engagés dans les trous 67' de l'élément 60', qui définissent ainsi la charnière 22'A de la cassette 10'. La charnière 22A de la cassette 10 est définie de manière analogue par les doigts cylindriques 68' engagés dans les trous 67 de l'élément 60.

Les positions de fermeture de chacune des cassettes 10' et 10 sont définies par les couples bossage-empreinte 70' - 71"A et 70 - 71'A. Leur position d'ouverture est définie par les couples bossage-empreinte 70' - 71"B et 70 - 71'B, ainsi que visible dans la figure 23 pour la cassette 10 montrée dans cette position d'ouverture. On note que dans cette position d'ouverture le bord intérieur de l'épaulement ou butée 69 est en appui sur la partie supérieure des oreilles 64' et s'oppose à une ouverture sur plus de 90° de la cassette 10. Il en est de même entre la butée 69' et l'oreille 64'' quand la cassette 10' est ouverte à son tour.

On note que les pattes centrales de fixation 73' et 73 des éléments 60' et 60'' sont sans effet dans la réglette 20A. Ils peuvent ne pas exister, l'élément 60'' étant alors le seul à présenter une telle patte 73", le distinguant des précédents.

Dans les exemples de réalisation décrits ci-avant, la réglette d'assemblage d'une seule pièce ou les éléments individuels qui la constitue, sont moulés. Il en est de même des dispositifs de verrouillage.

## Revendications

1. Ensemble de modules empilés et articulés, comportant une base plane (19), une pluralité de modules (10) empilables les uns sur les autres et sur la base et un support (20 ; 20A) d'assemblage articulé desdits modules, lesdits modules (10) étant plats et sensiblement rectangulaires et ayant deux grandes faces pour leur empilement et quatre bords périphériques (2A, 2B) étroits et opposés deux à deux, ledit support (20, 20A) étant maintenu sur ladite base, s'etendant sur la hauteur des modules empilés les uns sur les autres et étant muni de moyens d'articulation (22 ; 22A) définis parallèlement à ladite base et au pas des modules empilés sur cette base, pour le pivotement des différents modules entre une première position pour laquelle ces modules sont sensiblement parallèles à la base et une deuxième position pour laquelle ils sont sensiblement orthogonaux à ladite base, à l'exception éventuelle du premier module sur ladite base, caractérisé en ce que ledit support (20, 20A) est une réglette longitudinale constituée de tronçons successifs (26, 27 ; 60) s'étendant les uns à la suite des autres dans la direction d'empilement des modules, et solidarisés et articulés les uns aux autres par lesdits moyens d'articulation (22 ; 22A), chacun desdits tronçons (26, 27 ; 60) de la réglette (20, 20A) étant muni de premiers moyens de montage et retenue (32, 33 ; 62, 63) affectés à la fixation rigide et amovible des différents modules (10, 10', 10") sensiblement contre une face dite d'assemblage de ladite réglette, et en ce que chacun desdits modules (10) est équipé sur un premier (2A) de ses bords périphériques (2A, 2B) de deuxièmes moyens de montage et retenue (17, 24 ; 18, 25) complémentaires desdits premiers pour cette fixation rigide et amovible de chaque module sur ladite réglette.

2. Ensemble selon la revendication 1, caractérisé en ce que lesdits seconds moyens de montage et retenue comportent une paire de pattes de guidage (17, 18) saillantes extérieurement sur la largeur dudit premier bord périphérique (2A) de chaque module, et en ce que lesdits premiers moyens de montage et retenue comportent des paires successives de pattes latérales (32, 60) définies sur les côtés longitudinaux de chaque tronçon de ladite réglette et destinées à être reçues chacune dans la paire de pattes de guidage de l'un des modules.

3. Ensemble selon l'une des revendications 1 et 2, caractérisé en ce que chacun desdits premier et deuxième moyens de montage et retenue comporte au moins un évidement (33, 63) et au moins un doigt correspondant (24, 25) de retenue dans ledit évidement, prévus sur la face d'assemblage de ladite réglette et sur ledit premier bord de chaque module, respectivement.

4. Ensemble selon l'une des revendications 2 et 3, caractérisé en ce que ladite réglette comporte au moins une série de butées (34, 69) prévues sur les différents tronçons de la réglette et affectées au pivotement angulaire possible, sensiblement de 90°, de l'un desdits tronçons par rapport à un autre adjacent, autour des moyens d'articulation de ces deux tronçons, pour limiter en correspondance le pivotement du module concerné dans ladite deuxième position.

5. Ensemble selon la revendication 4, caractérisé en ce que ladite réglette (20) est une pièce d'un seul tenant, sur laquelle lesdits moyens d'articulation sont constitués par des sections d'épaisseur réduite (22) formant des charnières entre les différents tronçons successifs (26, 27).

6. Ensemble selon la revendication 4, caractérisé en ce que ladite réglette (20) est constituée par une pluralité d'éléments individuels (26, 27) assemblés non jointivement les uns à la suite des autres par au moins une bande d'assemblage (28) fixée sur chacun d'eux, lesdits éléments constituant lesdits tronçons de la réglette et ladite bande définissant lesdits moyens d'articulation entre les tronçons.

7. Ensemble selon la revendication 4, caractérisé en ce que ladite réglette est constituée par une pluralité d'éléments individuels (60, 60', 60") équipés chacun d'une paire de doigts cylindriques d'articulation (68) et d'une paire de trous (67) correspondants, pour leur assemblage les uns à la suite des autres en définissant simultanément lesdits moyens d'articulation (22A) de la réglette résultante.

8. Ensemble selon l'une des revendications 6 et 7, caractérisé en ce qu'il comporte en outre, sur la longueur de la réglette, au moins une série alternée de bossages (37) et de lumières (39), l'un des bossages de chaque série étant sur l'un des éléments et la lumière suivante sur l'élément suivant, pour constituer un encliquetage élastique entre deux éléments adjacents quand les modules fixés sur ces deux éléments sont l'un dans ladite première position et l'autre dans ladite deuxième position.

9. Ensemble selon la revendication 8, caractérisé en ce que lesdites butées (34) sont saillantes parallèlement les unes aux autres sur la face opposée à la face d'assemblage de la réglette et ont sur chacune d'elles des surfaces chanfreinées à 45° en regard de celles des butées adjacentes.

10. Ensemble selon la revendication 7, caractérisé en ce que lesdits éléments individuels (60) comportent une paire d'oreilles (64) quasi latérales et saillantes transversalement sur la face opposée à la face d'assemblage de la réglette, chacune desdites oreilles présentant un épaulement (69) la divisant en deux parties d'emboîtement l'une supérieure (66), saillante sur un côté dit supérieur de l'élément individuel concerné et rendue sensiblement élastique, et l'autre inférieure et rigide (65) entre ledit côté supérieur et le côté opposé inférieur de cet élément, lesdites parties inférieures et supérieures des oreilles des différents éléments de la réglette s'accolant les unes contre les autres et ayant sur chacune d'elles ledit doigt cylindrique d'articulation (68) ou le trou correspondant (67) pour l'assemblage articulé des différents éléments successifs.

11. Ensemble selon la revendication 10, caractérisé en ce que lesdites butées (69) sont constituées par l'épaulement entre lesdites parties supérieure et inférieure des oreilles de chaque élément, limitant le pivotement des oreilles de chacun des deux autres éléments adjacents de la réglette.

12. Ensemble selon l'une des revendications 10 et 11, caractérisé en ce que chaque oreille comporte un bossage (70) sur l'une de ses parties supérieure et inférieure et une première empreinte (71B) complémentaire dudit bossage sur l'autre partie, pour constituer un encliquetage élastique entre deux éléments adjacents, quand les modules fixés sur ces deux éléments sont l'un dans ladite première position et l'autre dans ladite deuxième position.

13. Ensemble selon la revendication 12, caractérisé en ce que chaque oreille comporte une deuxième empreinte (71A) complémentaire dudit bossage et située sur celle desdites parties supérieure et inférieure présentant ladite première empreinte (71B), pour définir un encliquetage élastique entre deux éléments adjacents de la réglette, quand les deux modules fixés sur ces éléments sont dans l'une desdites première et deuxième positions.

14. Ensemble selon l'une des revendications 1 à 13, caractérisé en ce que chacun des modules (10, 10', 10") est équipé, identiquement audit premier bord périphérique, de deuxièmes moyens de montage et de retenue (17, 24 ; 18, 25) sur un deuxième bord périphérique opposé audit premier, pour la fixation sélective du module à la réglette par l'un de ses premier et deuxième bords périphériques.

15. Ensemble selon la revendication 14, caractérisé en ce qu'il comporte, en outre, des dispositifs de verrouillage (21) des modules les uns sur les autres, adaptés et montés individuellement sur l'autre desdits premier et deuxième bords périphériques des différents modules et équipés individuellement sur une face dite de fixation de troisièmes moyens de montage et de retenue (62, 63) identiques auxdits premiers moyens (32, 33).

16. Ensemble selon la revendication 15, caractérisé en ce que chaque dispositif de verrouillage comporte au moins une patte centrale d'encliquetage (44), prévue sur une deuxième face opposée à celle de fixation et saillante sur une troisième face dite inférieure du dispositif, et une ouverture centrale correspondante (45) ouverte sur la deuxième face et la face opposée à la troisième et dite supérieure du dispositif, la patte centrale d'encliquetage du dispositif monté sur l'un des modules étant reçue dans l'ouverture centrale du dispositif monté sur le module dit sous-jacent, quand ces modules sont empilés l'un sur l'autre.

17. Ensemble selon la revendication 16, caractérisé en ce que chaque dispositif comporte, en outre, un levier (46) d'actionnement de ladite patte centrale d'encliquetage, limitant l'ouverture centrale sur la deuxième face du dispositif et faisant saillie sur cette deuxième face.

18. Ensemble selon la revendication 17, caractérisé en ce que chaque dispositif comporte en outre une paire de doigts de centrage (47) saillants sur l'une de ses faces inférieure et supérieure et une paire de trous de centrage correspondants (48) ouverts sur l'autre de ses faces inférieure et supérieure.

19. Ensemble selon l'une des revendications 1 à 18, caractérisé en ce que lesdits modules sont des cassettes (10, 10', 10") recevant des fibres optiques par deux accès d'entrée des fibres, assurant intérieurement leur lovage et le stockage d'épissures entre elles et comportant quatre accès possibles desdites fibres (3), prévus aux quatre coins sensiblement de la cassette, pour la sélection des deux accès d'entrée des fibres parmi les quatre accès possibles.

## Patentansprüche

1. Zusammenbau von gestapelten Gelenkmodulen, bestehend aus einer ebenen Basis (19), einer Vielzahl von aufeinander und auf der Basis stapelbaren Modulen (10) und einer Auflage (20, 20A) für die gelenkige Verbindung der besagten Module, wobei die besagten Module (10) flach und merklich rechteckig sind und zwei Hauptflächen für ihre Stapelung und vier schmale peripherische Umrandungen (2A; 2B) aufweisen, von denen jeweils zwei einander gegenüberliegen, wobei die besagte Auflage (20, 20A) auf der besagten Basis gehalten wird, sich über die Höhe der aufeinandergestapelten Module erstreckt und mit Anlenkmitteln (22, 22A) versehen ist, welche parallel zur besagten Basis und zur Höhe der auf dieser Basis gestapelten Module definiert werden, zum Schwenken der verschiedenen Module zwischen einer ersten Position, in welcher diese Module merklich parallel zur Basis stehen, und einer zweiten Position, in welcher sie merklich im rechten Winkel zu der besagten Basis stehen, mit eventueller Ausnahme des ersten Moduls auf der besagten Basis,
dadurch gekennzeichnet, daß die besagte Auflage (20, 20A) eine längliche Leiste ist, die aus aufeinanderfolgenden Teilstücken (26, 27; 60) gebildet wird, welche sich eines nach dem anderen in Stapelrichtung der Module erstrecken und miteinander verbunden und aneinander angelenkt sind mit Hilfe der besagten Anlenkmittel (22, 22A), wobei jedes der besagten Teilstücke (26, 27; 60) der Leiste (20, 20A) mit ersten Montage- und Haltemitteln (32, 33; 62, 63) versehen ist, welche der festen und lösbaren Befestigung der verschiedenen Module (10,10', 10") merklich an einer sogenannten Verbindungsfläche der besagten Leiste zugeordnet sind, und dadurch, daß jedes der besagten Module (10) auf einer ersten (2A) seiner peripherischen Umrandungen (2A, 2B) mit zweiten Montage- und Haltemitteln (17, 24; 18, 25) in Ergänzung der besagten ersten versehen ist, für eine feste und lösbare Befestigung jedes Moduls auf der besagten Leiste.

2. Zusammenbau gemäß Anspruch 1, dadurch gekennzeichnet, daß die besagten zweiten Montage- und Haltemittel ein Paar Führungsklauen (17, 18) umfassen, welche außen über die Breite der besagten ersten peripherischen Umrandung (2A) jedes Moduls hinausragen und dadurch, daß die besagten ersten Montage- und Haltemittel aufeinanderfolgende Paare von seitlichen Klauen (32, 60) umfassen, welche auf die Längsseiten jedes Teilstücks der besagten Leiste beschränkt und dazu bestimmt sind, jeweils in dem Paar Führungsklauen eines der Module aufgenommen zu werden.

3. Zusammenbau gemäß Anspruch 1 - 2, dadurch gekennzeichnet, daß jedes der besagten ersten und zweiten Montage- und Haltemittel mindestens eine Ausnehmung (33, 63) und mindestens einen entsprechenden Haltezapfen (24, 25) in der besagten Ausnehmung aufweist, welche auf der Verbindungsfläche der besagten Leiste bzw. auf der besagten ersten Umrandung jedes Moduls vorgesehen sind.

4. Zusammenbau gemäß einem der Ansprüche 2 - 3, dadurch gekennzeichnet, daß die besagte Leiste mindestens eine Reihe von Anschlägen (34, 69) aufweist, welche auf den verschiedenen Teilstücken der Leiste vorgesehen sind und dem möglichen Schwenken, merklich um 90°, eines der besagten Teilstücke in bezug auf ein anderes anliegendes Teilstück um die Anlenkmittel dieser beiden Teilstücke zugeordnet sind, um die Schwenkbewegung des betroffenen Moduls in der besagten zweiten Position entsprechend zu begrenzen.

5. Zusammenbau gemäß Anspruch 4, dadurch gekennzeichnet, daß die besagte Leiste (20) ein durchgehendes Teil ist, auf welchem die besagten Anlenkmittel aus Abschnitten geringer Stärke (22) gebildet werden, die zwischen den verschiedenen aufeinanderfolgenden Teilstücken Drehgelenke bilden.

6. Zusammenbau gemäß Anspruch 4, dadurch gekennzeichnet, daß die besagte Leiste (20) aus einer Vielzahl einzelner Elemente (26, 27) gebildet wird, die nicht aneinanderstoßend eines nach dem anderen durch mindestens ein auf jedem von ihnen befestigten Verbindungsband (28) verbunden sind, wobei die besagten Elemente, welche die besagten Teilstücke der Leiste bilden und das besagte Band die besagten Anlenkmittel zwischen den Teilstücken definieren.

7. Zusammenbau gemäß Anspruch 4, dadurch gekennzeichnet, daß die besagte Leiste aus einer Vielzahl einzelner Elemente (60, 60', 60") gebildet wird, von denen jedes mit einem Paar zylindrischer Anlenkzapfen(68) und einem Paar entsprechender Löcher (67) für ihre Verbindung eines nach dem anderen versehen ist bei gleichzeitiger Begrenzung der besagten Anlenkmittel (22A) der resultierenden Leiste.

8. Zusammenbau gemäß einem der Ansprüche 6 - 7, dadurch gekennzeichnet, daß er außerdem, über die Länge der Leiste, mindestens eine abwechselnde Reihe von Vorsprüngen (37) und Öffnungen (39) umfaßt, wobei sich einer der Vorsprünge jeder Reihe auf einem der Elemente und die nächste Öffnung auf dem nächsten Element befindet, um eine elastische Verklinkung zwischen zwei anliegenden Elementen zu bilden, wenn sich von den auf diesen beiden Elementen befestigten Modulen eines in der besagten ersten Position und das andere in der besagten zweiten Position befindet.

9. Zusammenbau gemäß Anspruch 8, dadurch gekennzeichnet, daß die besagten Anschläge (34) parallel zueinander an der der Verbindungsfläche der Leiste gegenüberliegenden Seite vorspringen und jeweils um 45° abgeschrägte Flächen im Vergleich zu denjenigen der anliegenden Anschläge aufweisen.

10. Zusammenbau gemäß Anspruch 7, dadurch gekennzeichnet, daß die besagten Einzelelemente (60) ein Paar gewissermaßen seitliche und an der der Verbindungsfläche der Leiste gegenüberliegenden Seite quer vorspringende Ansätze (64) umfassen, wobei jeder der besagten Ansätze einen Vorsprung darstellt, der die Leiste in zwei Steckteile teilt, einen oberen Teil (66), welcher auf einer sogenannten oberen Seite des betroffenen Einzelelements vorspringt und merklich elastisch ist, und einen unteren und festen Teil (65) zwischen der besagten oberen Seite und der gegenüberliegenden unteren Seite dieses Elements, wobei die besagten unteren und oberen Teile der Ansätze der verschiedenen Elemente der Leiste aneinandergefügt sind und jeweils den besagten zylindrischen Anlenkzapfen (68) oder das entsprechende Loch (67) für den gelenkigen Zusammenbau der verschiedenen aufeinanderfolgenden Elemente aufweisen.

11. Zusammenbau gemäß Anspruch 10, dadurch gekennzeichnet, daß die besagten Anschläge (69) aus dem Vorsprung zwischen dem besagten Ober- und Unterteil der Ansätze jedes Elements bestehen und die Schwenkbewegung der Ansätze jedes der beiden anderen anliegenden Elemente der Leiste begrenzen.

12. Zusammenbau gemäß einem der Ansprüche 10 - 11, dadurch gekennzeichnet, daß jeder Ansatz einen Vorsprung (70) auf einem seiner Ober- und Unterteile und eine erste Vertiefung (71B) in Ergänzung zu dem besagten Vorsprung auf dem anderen Teil aufweist, um eine elastische Verklinkung zwischen zwei anliegenden Elementen zu bilden, wenn sich von den auf diesen beiden Elementen befestigten Modulen eines in der besagten ersten Position und das andere in der besagten zweiten Position befindet.

13. Zusammenbau gemäß Anspruch 12, dadurch gekennzeichnet, daß jeder Zapfen eine zweite Vertiefung (71A) aufweist, die dem besagten Vorsprung zugehörig ist und sich auf demjenigen der besagten Ober- und Unterteile befindet, welches die besagte erste Vertiefung (71B) darstellt, um eine elastische Verklinkung zwischen zwei anliegenden Elementen der Leiste zu bilden, wenn sich die auf diesen Elementen befestigten beiden Module in einer der besagten ersten und zweiten Position befinden.

14. Zusammenbau gemäß einem der Ansprüche 1 - 13, dadurch gekennzeichnet, daß jedes der Module (10, 10', 10") identisch mit der besagten ersten peripherischen Umrandung mit zweiten Montage- und Haltemitteln (17, 24; 18, 25) auf einer der ersten gegenüberliegenden zweiten peripherischen Umrandung versehen ist, für die selektive Befestigung des Moduls auf der Leiste mittels einer seiner ersten und zweiten peripherischen Umrandungen.

15. Zusammenbau gemäß Anspruch 14, dadurch gekennzeichnet, daß er außerdem Vorrichtungen (21) für die Verriegelung der Module aufeinander umfaßt, die einzeln auf der anderen der besagten ersten und zweiten peripherischen Umrandung der verschiedenen Module adaptiert und montiert sind und einzeln auf einer sogenannten Befestigungsfläche mit dritten Montage- und Haltemitteln (62, 63) versehen sind, die mit den besagten ersten Mitteln (32, 33) ident sind.

16. Zusammenbau gemäß Anspruch 15, dadurch gekennzeichnet, daß jede Verriegelungsvorrichtung mindestens eine zentrale Verklinkungsklaue (44), die auf einer zweiten, der Befestigungsseite gegenüberliegenden Seite vorgesehen ist und über eine dritte, sogenannte untere Seite der Vorrichtung vorspringt, und eine entsprechende Zentralöffnung (45) umfaßt, die zu der zweiten Seite und der der dritten Seite gegenüberliegenden, der sogenannten oberen Seite der Vorrichtung hin offen ist, wobei die zentrale Verklinkungsklaue der auf einem der Module montierten Vorrichtung in der Zentralöffnung der auf dem sogenannten darunterliegenden Modul montierten Vorrichtung aufgenommen wird, wenn diese Module aufeinander gestapelt werden.

17. Zusammenbau gemäß Anspruch 16, dadurch gekennzeichnet, daß jede Vorrichtung außerdem einen Betätigungshebel (46) für die besagte zentrale Verklinkungsklaue umfaßt, der die Zentralöffnung auf der zweiten Seite der Vorrichtung begrenzt und über diese zweite Seite hinausragt.

18. Zusammenbau gemäß Anspruch 17, dadurch gekennzeichnet, daß jede Vorrichtung außerdem ein Paar Zentrierstifte) (47) , die über eine ihrer Unter- und Oberseiten hinausragen, und ein Paar entsprechende Zentrierlöcher (48) umfaßt, die zu der anderen ihrer Ober- und Unterseiten hin offen sind.

19. Zusammenbau gemäß einem der Ansprüche 1 - 18, dadurch gekennzeichnet, daß die besagten Module Kassetten (10,10',10") sind, welche durch zwei Eingangsöffnungen optische Fasern aufnehmen, im Inneren deren Aufwicklung und die Lagerung der Spleißverbindungen gewährleisten und für die besagten Fasern (3) vier mögliche Öffnungen aufweisen, die merklich in den vier Ecken der Kassette vorgesehen sind, für die Auswahl der beiden Fasereingangsöffnungen unter den vier möglichen Öffnungen.

## Claims

1. An assembly of stacked and hinged modules, comprising a plane base (19), a plurality of modules (10) that are stackable on one another and on the base, and an assembly support (20; 20A) hinged to said modules, the said modules (10) being flat and substantially rectangular and having two large faces for stacking purposes and four peripheral edges (2A, 2B) that are narrow and opposite in pairs, said support (20, 20A) being held on said base, extending over the height of the modules stacked on one another, and being provided with hinge means (22; 22A) defined parallel to said base and at the pitch of said modules stacked on said base for pivoting the various modules between respective first positions in which said modules are substantially parallel to the base, and respective second positions in which they are substantially orthogonal to said base, possibly with the exception of the first module on said base, the assembly being characterized in that said support (20, 20A) is a longitudinal strip constituted by successive lengths (26, 27; 60) extending one after another in the module stacking direction, and secured and hinged to one another by said hinge means (22; 22A), each of said lengths (26, 27; 60) of the strip (20, 20A) being provided with first mounting and retaining means (32, 33; 62, 63) for the purpose of rigidly and releasably fixing the various modules (10, 10', 10") substantially against an "assembly" face of said strip, and in that each of said modules (10) is fitted on a first (2A) of its peripheral edges (2A, 2B) with second mounting and retaining means (17, 24; 18, 25) that are complementary to said first mounting and retaining means for said rigid and releasable fixing of each module on said strip.

2. An assembly according to claim 1, characterized in that said second assembling and retaining means include a pair of guide catches (17, 18) projecting outwardly over the width of said first peripheral edge (2A) of each module, and in that said first assembling and retaining means include pairs of successive side latches (32, 60) defined on the longitudinal sides of each length of said strip and each pair designed to be received in the pair of guide catches of a respective one of the modules.

3. An assembly according to claim 1 or 2, characterized in that each of said first and second assembling and retaining means includes at least one recess (33, 63) and at least one corresponding retaining finger (24, 25) received in said recess, respectively provided on the assembling face of said strip and on said first edge of each module.

4. An assembly according to claim 2 or 3, characterized in that said strip includes at least one series of abutments (34, 69) provided on the various lengths of the strip and serving for enabling one of said lengths to pivot substantially through 90° relative to an adjacent other length about the hinge means between the two lengths, in order to put a corresponding limit on the pivoting of the module concerned in said second positions.

5. An assembly according to claim 4, characterized in that said strip (20) is integrally formed as a single piece on which said hinge means are constituted by sections of reduced thickness (22) forming hinges between the various successive lengths (26, 27).

6. An assembly according to claim 4, characterized in that said strip (20) is constituted by a plurality of individual elements (26, 27) assembled together without touching one after another by means of at least one assembling tape (28) fixed to each of them, said elements constituting said lengths of the strip and said tape defining said hinge means between the lengths.

7. An assembly according to claim 4, characterized in that said strip is constituted by a plurality of individual elements (60, 60', 60") each equipped with a pair of cylindrical hinge fingers (68) and a pair of corresponding holes (67) for assembling them together one after another and simultaneously defining said hinge means (22A) of the resulting strip.

8. An assembly according to claim 6 or 7, characterized in that, over the length of the strip, it further includes a series of alternate projections (37) and apertures (39), one of the projections in each series being on one of the elements, and the following aperture being on the following element, so as to constitute a resilient snap-fastening between two adjacent elements when one of the modules fixed on said two elements is in said first position and the other is in said second position.

9. An assembly according to claim 8, characterized in that said abutments (34) project parallel to one another from the faces opposite the assembling face of the strip, and each have their surfaces chamfered at 45° facing those of the adjacent abutments.

10. An assembly according to claim 7, characterized in that said individual elements (60) include a pair of lugs (64) almost at its sides and projecting from the face opposite the assembling face of the strip, each of said lugs presenting a shoulder (69) dividing it into two fitting portions, the top portion (66) projecting from the top edge of the individual element in question and made substantially resilient, and the bottom portion (65) being rigid between said top edge and the bottom opposite edge of said element, said bottom portion and said top portion of the lugs of the various elements of the strip fitting against each other, and each having either said cylindrical hinge finger (68) or the corresponding hole (67) for hinged assembly of the various successive elements.

11. An assembly according to claim 10, characterized in that each of said abutments (69) is constituted by the shoulder between said top portion and said bottom portion of the lugs of each element, limiting pivoting of the lugs of each of the two other adjacent elements of the strip.

12. An assembly according to claim 10 or 11, characterized in that each lug includes a projection (70) on either its top or bottom portion, and a first indent (71B) complementary to said projection on the other portion, so as to constitute a resilient snap-fastening between two adjacent elements when one of the modules fixed on said two elements is in said first position and the other is in said second position.

13. An assembly according to claim 12, characterized in that each lug includes a second indent (71A) which is complementary to said projection, which second indent is situated on that one of said top portion and said bottom portion which has said first indent (71B), so as to define a resilient snap-fastening between two adjacent elements of the strip, when the two modules fixed on said elements are in one of said first and second positions.

14. An assembly according to any one of claims 1 to 13, characterized in that the edge opposite from the first edge of each of the modules (10, 10', 10") is equipped identically to said first peripheral edge with second assembling and retaining means (17, 24; 18, 25) on a second peripheral edge opposite said first for selectively fixing the module to the strip by one of its first and second peripheral edges.

15. An assembly according to claim 14, characterized in that it further includes locking devices (21) for locking the modules to one another, which locking devices are adapted and mounted individually on the other of said first and second peripheral edges of the various modules, and are individually equipped on a "fixing" face with third assembling and retaining means (62, 63) identical to said first means (32, 33).

16. An assembly according to claim 15, characterized in that each locking device includes at least one central snap-fastening catch (44) provided on a second face opposite the fixing face and projecting from a "bottom" third face of the device, and a corresponding central opening (45) opening out in the second face and the face opposite the third and "top" of the device, the central snap-fastening catch of the device mounted on one of the modules being received inside the central opening of the device mounted on the "underlying" module when the modules are stacked on one another.

17. An assembly according to claim 16, characterized in that each device further includes a lever (46) for actuating said central snap-fastening catch, limiting the central opening on the second face of the device and projecting from said second face.

18. An assembly according to claim 17, characterized in that each device further includes a pair of centering fingers (47) projecting from either the top face or the bottom face, and a corresponding pair of centering holes (48) opening out either in the bottom face or in the top face.

19. An assembly according to any one of claims 1 to 18, characterized in that said modules are cassettes (10, 10', 10") receiving optical fibers via two fiber inlet accesses, enabling them to be wound down internally and enabling splices between them to be stored, and including four possible accesses for said fibers (3) provided substantially at the four corners of the cassette, for selecting two fiber inlet accesses from the four possible accesses.
